# EUROPEAN PATENT APPLICATION

(11) **EP 4 458 141 A1**
(43) Date of publication of application: **06.11.2024**
(21) Application number: 23915189.7
(22) Date of filing: 26.10.2023
(51) Int. Cl.: A01K 1/01

(54) **MOUNTING STRUCTURE AND CAT LITTER BOX**

(30) Priority: 16.03.2023 CN 202320515984 U
(71) Applicant: PETKIT NETWORK TECHNOLOGY (SHANGHAI) CO., LTD., Shanghai 201100 (CN)
(72) Inventor: SHI, Xin, Shanghai 201100 (CN); JIANG, Lihua, Shanghai 201100 (CN); MA, Yunxin, Shanghai 201100 (CN); MA, Xiaoqing, Shanghai 201100 (CN); ZHANG, Junchao, Shanghai 201100 (CN)
(74) Representative: Cabinet Beaumont
(86) International application number: PCT/CN2023/126832
(87) International publication number: WO 2024/187758

(57) **Abstract**

Provided are an installation structure and a cat toilet. The installation structure includes a snap and an arc-shaped clamping ring. A first end of the snap is configured to be connected to the edge of a first end of an arc-shaped groove of a support seat. A second end of the snap is provided with a first clamping portion. A first end of the arc-shaped clamping ring is configured to be rotatably connected to the edge of a second end of the arc-shaped groove of the support seat. A second end of the arc-shaped clamping ring is provided with a second clamping portion. The arc-shaped clamping ring is configured to rotate until the second clamping portion engages with the first clamping portion to rotatably lock an installation portion of a cat toilet drum between the arc-shaped clamping ring and the arc-shaped groove.

## Description

This application claims priority to Chinese Patent Application No. 202320515984.1 filed Mar. 16, 2023, the disclosure of which is incorporated herein by reference in its entirety.

### TECHNICAL FIELD

The present application relates to the technical field of pet products, for example, an installation structure and a cat toilet.

### BACKGROUND

With the continuous improvement of people's material living standards, people's pursuit of spiritual life has gradually increased, and an increasing number of people are raising pet cats. Unlike other pets, cats naturally use toilets with cat litter. Cat litter, used to bury the excrement produced by pet cats, is usually used together with a cat litter box (or cat toilet). It is cumbersome, time-consuming and laborious for breeders to manually separate cat excrement from cat litter, so a special fully automatic pet cat toilet emerges.

The related art discloses a screening apparatus for pet cat excrement, including a support seat and a drum rotatably installed on the support seat. The drum contains cat litter and is equipped with a screening mechanism. A drum support groove that matches the outer contour of the drum is disposed on the inner side of the support seat. A drum drive apparatus is installed on the groove wall of the drum support groove. The drum is disposed in the drum support groove, and the drum drive apparatus drives the drum to rotate, thereby screening the pet cat's excrement from the cat litter and guiding the pet cat's excrement to a waste outlet to achieve screening and discharge of the excrement. However, the drum of the screening apparatus for pet cat excrement is only limited to the drum support groove of the support seat without other connection portions. The connection stability between the drum and the support seat is poor, so the drum easily jumps in the rotation process.

### SUMMARY

The present application provides an installation structure and a cat toilet, which can improve the connection stability between the cat toilet drum and the support seat and prevent the cat toilet drum from jumping in the rotation process.

In an aspect, the present application provides an installation structure.

The installation structure includes a snap and an arc-shaped clamping ring. A first end of the snap is configured to be connected to the edge of a first end of an arc-shaped groove of a support seat. A second end of the snap is provided with a first clamping portion.

A first end of the arc-shaped clamping ring is configured to be rotatably connected to the edge of a second end of the arc-shaped groove of the support seat. A second end of the arc-shaped clamping ring is provided with a second clamping portion. The arc-shaped clamping ring is configured to rotate until the second clamping portion engages with the first clamping portion to rotatably lock an installation portion of a cat toilet drum between the arc-shaped clamping ring and the arc-shaped groove.

In another aspect, the present application also provides a cat toilet. The cat toilet includes a support seat, a cat toilet drum rotatably installed on the support seat, and the preceding installation structure. An installation portion is disposed on the cat toilet drum. An arc-shaped groove is disposed on the support seat. A first end of a snap away from a first clamping portion is connected to the edge of a first end of the arc-shaped groove. A first end of an arc-shaped clamping ring away from a second clamping portion is rotatably connected to the edge of a second end of the arc-shaped groove. The second clamping portion engages with the first clamping portion. The installation portion is rotatably locked between the arc-shaped clamping ring and the arc-shaped groove.

### BRIEF DESCRIPTION OF DRAWINGS

FIG. 1 is a diagram illustrating the structure of an installation structure of a cat toilet in a locked state according to an embodiment of the present application.
FIG. 2 is a diagram illustrating the structure of an installation structure of a cat toilet in an open state according to an embodiment of the present application.
FIG. 3 is an exploded diagram of a cat toilet according to an embodiment of the present application.
FIG. 4 is a diagram illustrating the structure of an installation structure according to an embodiment of the present application.
FIG. 5 is a diagram illustrating the structure of a snap according to an embodiment of the present application.
FIG. 6 is a diagram illustrating the structures of an arc-shaped clamping ring and first rollers according to an embodiment of the present application.

### Reference list

- 1: snap
- 11: first clamping portion
- 111: first protrusion
- 1111: first guide slope
- 112: first recess
- 113: extension portion
- 12: first connection portion
- 2: arc-shaped clamping ring
- 21: second clamping portion
- 211: second protrusion
- 2111: second guide slope
- 212: second recess
- 22: handle
- 23: second connection portion
- 3: first roller
- 4: torsion spring
- 5: first connection seat
- 6: second connection seat
- 100: cat toilet drum
- 101: installation portion
- 1011: annular groove
- 1012: waste outlet
- 102: driven gear
- 103: pet inlet
- 200: support seat
- 201: arc-shaped groove
- 202: second roller
- 203: support wheel
- 204: installation groove

### DETAILED DESCRIPTION

In the description of the present application, unless otherwise expressly specified and limited, a term "connected to each other", "connected", or "secured" is to be construed in a broad sense, for example, as securely connected, detachably connected, or integrated; mechanically connected or electrically connected; directly connected to each other or indirectly connected to each other via an intermediary; or internally connected between two components or interaction relations between two components. For those of ordinary skill in the art, specific meanings of the preceding terms in the present application may be construed according to specific situations.

In the present application, unless otherwise expressly specified and limited, when a first feature is described as "above" or "below" a second feature, the first feature and the second feature may be in direct contact or be in contact via another feature between the two features instead of being in direct contact. Moreover, when the first feature is "on", "above", or "over" the second feature, the first feature is right on, above, or over the second feature, or the first feature is obliquely on, above, or over the second feature, or the first feature is simply at a higher level than the second feature. When the first feature is "under", "below", or "underneath" the second feature, the first feature is right under, below, or underneath the second feature, or the first feature is obliquely under, below, or underneath the second feature, or the first feature is simply at a lower level than the second feature.

In the description of the present application, orientations or position relations indicated by terms such as "above", "below", and "right" are based on orientations or position relations shown in the drawings. These orientations or position relations are intended only to facilitate description and simplify operation and not to indicate or imply that a device or element referred to must have such specific orientations or must be configured or operated in such specific orientations. Thus, these orientations or position relations are not to be construed as limiting present application. In addition, terms "first" and "second" are used only to distinguish between descriptions and have no special meaning.

Technical solutions of the present application are further described hereinafter through embodiments in conjunction with the drawings.

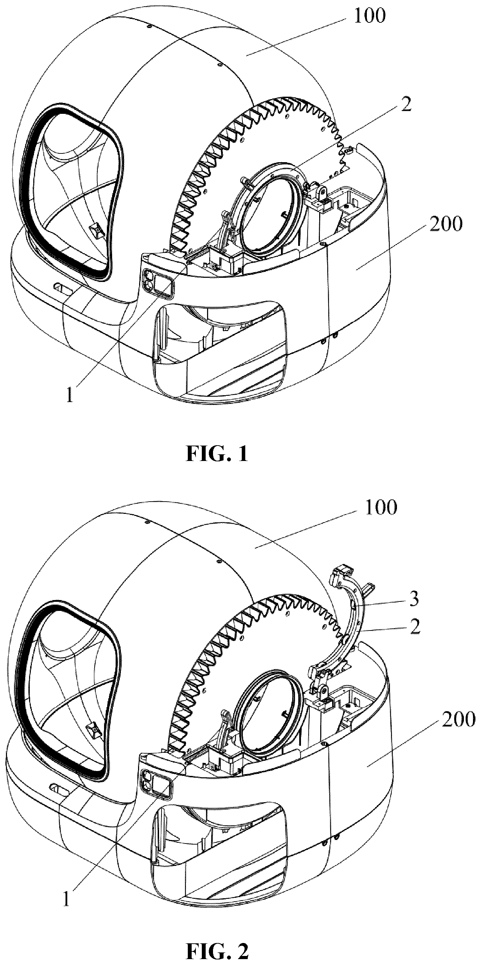

This embodiment provides an installation structure, see FIGS. 1 to 6, for rotatably installing a cat toilet drum 100 on a support seat 200 to improve the connection stability between the cat toilet drum 100 and the support seat 200. The installation structure includes a snap 1 and an arc-shaped clamping ring 2. A first end of the snap 1 is configured to be connected to the edge of a first end of an arc-shaped groove 201 of a support seat 200. A second end of the snap 1 is provided with a first clamping portion 11. A first end of the arc-shaped clamping ring 2 is configured to be rotatably connected to the edge of a second end of the arc-shaped groove 201 of the support seat 200. A second end of the arc-shaped clamping ring 2 is provided with a second clamping portion 21. The arc-shaped clamping ring 2 is configured to rotate until the second clamping portion 21 engages with the first clamping portion 11 to rotatably lock an installation portion 101 of a cat toilet drum 100 between the arc-shaped clamping ring 2 and the arc-shaped groove 201.

The snap 1 and the arc-shaped clamping ring 2 of the installation structure are connected to the opposite end edges of the arc-shaped groove 201 of the support seat 200, respectively. By the rotation of the arc-shaped clamping ring 2, the second clamping portion 21 of the arc-shaped clamping ring 2 can engage with the first clamping portion 11 of the snap 1 so that a closed space is formed between the arc-shaped clamping ring 2 and the arc-shaped groove 201. The installation portion 101 of the cat toilet drum 100 is limited to the closed space, which does not affect the rotation of the cat toilet drum 100 on the support seat 200, but restricts the radial movement of the cat toilet drum 100. Therefore, the installation structure achieves rotational locking of the cat toilet drum 100 and the support seat 200, improves the connection stability between the cat toilet drum 100 and the support seat 200, and effectively prevents the cat toilet drum 100 from jumping during rotation.

In an embodiment, the first clamping portion 11 is disposed on the inner side of the snap 1 and the second clamping portion 21 is disposed on the outside of the arc-shaped clamping ring 2, so that the second clamping portion 21 can engage with the inner side of the snap 1, and when the installation portion 101 of the cat toilet drum 100 is rotated and locked between the arc-shaped clamping ring 2 and the arc-shaped groove 201, the installation portion 101 is not interfered by the snap 1.

As shown in FIG. 1 to FIG. 3, the installation portion 101 of the cat toilet drum 100 has a circular structure, and the inner wall of the arc-shaped clamping ring 2 is an arc surface that fits the outer wall of the installation portion 101. When the first clamping portion 11 engages with the second clamping portion 21, the installation portion 101 can fit the inner wall of the arc-shaped clamping ring 2 and the groove wall of the arc-shaped groove 201 simultaneously. Thus, the installation portion 101 is locked, and the cat toilet drum 100 does not jump during rotation. In an embodiment, the inner wall of the arc-shaped clamping ring 2 and the groove wall of the arc-shaped groove 201 compose an annular surface fitting the installation portion 101 to better limit the installation portion 101. For example, when the groove wall of the arc-shaped groove 201 is one-third arc surface, the inner wall of the arc-shaped clamping ring 2 is correspondingly set to two-thirds arc surface; when the groove wall of the arc-shaped groove 201 is one quarter arc surface, the inner wall of the arc-shaped clamping ring 2 is correspondingly set to three quarters arc surface. In this embodiment, the arc-shaped groove 201 is semi-circular, and the arc-shaped clamping ring 2 is correspondingly set to a semi-circular shape. The specific shape of the arc-shaped clamping ring 2 is determined according to the actual shapes of the installation portion 101 and the arc-shaped groove 201 and is not limited to the situations listed in this embodiment.

In other embodiments, the snap 1 may also be set to an arc shape and be rotatably connected to the support seat 200. The inner wall of the snap 1, the inner wall of the arc-shaped clamping ring 2, and the groove wall of the arc-shaped groove 201 compose an annular surface fitted with the installation portion 101.

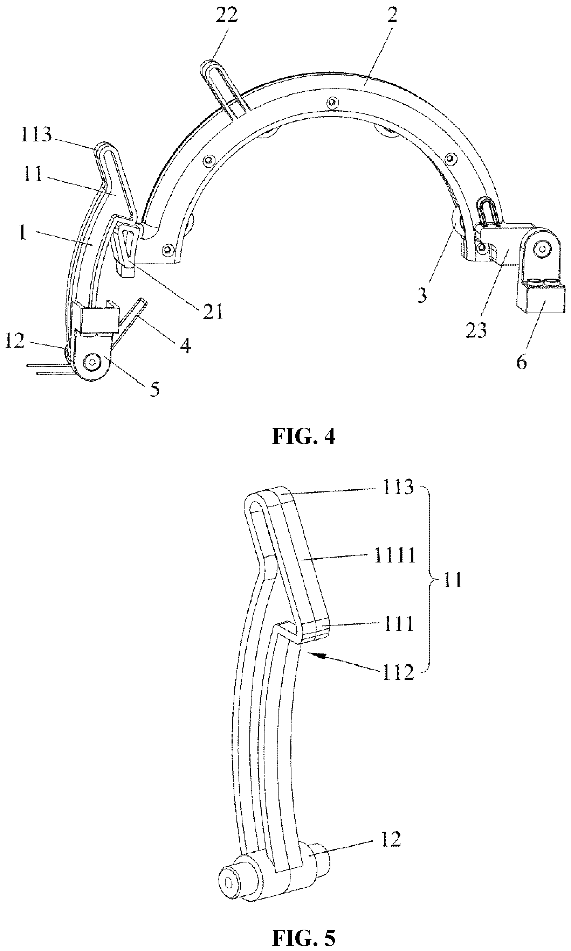

In an embodiment, as shown in FIG. 4, to reduce the friction between the installation portion 101 and the arc-shaped clamping ring 2 when the cat toilet drum 100 rotates, multiple first rollers 3 are circumferentially disposed on the inner side of the arc-shaped clamping ring 2 at intervals, and when the first clamping portion 11 engages with the second clamping portion 21, the multiple first rollers 3 are separately in rolling contact with the outer wall of the installation portion 101. With this arrangement, when the cat toilet drum 100 rotates, the sliding friction between the installation portion 101 and the arc-shaped clamping ring 2 is converted into rolling friction, which helps prevent the installation portion 101 and the arc-shaped clamping ring 2 from being worn and damaged, reduce the driving energy of the cat toilet drum 100, and save costs.

In an embodiment, multiple connection grooves are circumferentially disposed on the inner side of the arc-shaped clamping ring 2 at intervals, and multiple first rollers 3 are disposed in the multiple connection grooves in a one-to-one correspondence and partially extend out of the connection grooves to save space, increase the tightness of the installation structure, and improve the installation reliability of the first rollers 3. The first rollers 3 are connected to the arc-shaped clamping ring 2 through a rotating shaft to rotate relative to the arc-shaped clamping ring 2.

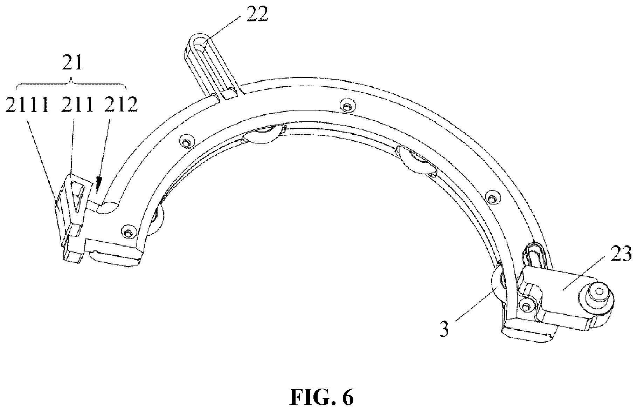

In an embodiment, as shown in FIG. 5 and FIG. 6, at least one of a first protrusion 111 or a first recess 112 is disposed on the first clamping portion 11, and a second recess 212 cooperating and engaging with the first protrusion 111 or a second protrusion 211 cooperating and engaging with the first recess 112 is disposed on the second clamping portion 21, or the second recess 212 cooperating and engaging with the first protrusion 111 and the second protrusion 211 cooperating and engaging with the first recess 112 are disposed on the second clamping portion 21, thereby achieving the engagement between the first clamping portion 11 and the second clamping portion 21.

In this embodiment, a first protrusion 111 and a first recess 112 are disposed on the first clamping portion 11, and a second protrusion 211 and a second recess 212 are disposed on the second clamping portion 21. When the first clamping portion 11 engages with the second clamping portion 21, the first protrusion 111 is clamped in the second recess 212, and the second protrusion 211 is snapped in the first recess 112. With the arrangement of two sets of protrusions and recesses, the engagement of the snap 1 and the arc-shaped clamping ring 2 is stronger, thereby further improving the connection stability between the cat toilet drum 100 and the support seat 200.

In an embodiment, to facilitate the engagement between the first clamping portion 11 and the second clamping portion 21, at least one of the following configurations is used: A first guide slope 1111 is disposed on the first protrusion 111; a second guide slope 2111 is disposed on the second protrusion 211.

In this embodiment, to enhance the guiding effect, a first guide slope 1111 is disposed on the first protrusion 111, and a second guide slope 2111 is disposed on the second protrusion 211. The first guide slope 1111 is a slope with the bottom inclined toward the inner side of the snap 1, and the second guide slope 2111 has the same inclination as the first guide slope 1111 so that when the arc-shaped clamping ring 2 rotates toward the snap 1, the second clamping portion 21 can move toward the inner side of the snap 1 and finally engages with the inner side of the snap 1.

In other embodiments, a first end of the snap 1 away from the first clamping portion 11 is fixedly connected to the support seat 200, and at least one of the snap 1 or the arc-shaped clamping ring 2 is made of elastic material such as plastic. In the process where the second clamping portion 21 engages with the first clamping portion 11, the second protrusion 211 first contacts the first protrusion 111 and moves toward the inner side of the snap 1 along the first guide slope 1111. At this time, the snap 1 is extruded and deformed outwardly, or the arc-shaped clamping ring 2 is extruded and deformed inwardly, or the snap 1 and the arc-shaped clamping ring 2 are extruded and deformed simultaneously until the second protrusion 211 leaves the first protrusion 111. In this case, at least one of the snap 1 or the arc-shaped clamping ring 2 is restored to the original state, the second protrusion 211 is snaped in the first recess 112, and the first protrusion 111 is snaped in the second recess 212. When the engagement between the first clamping portion 11 and the second clamping portion 21 needs to be released, the snap is held to deform the snap 1 outward and move the first clamping portion 11 outward until the first protrusion 111 comes out of the second recess 212, or the arc-shaped clamping ring 2 is held to deform the arc-shaped clamping ring 2 inward and move the second clamping portion 21 inward until the second protrusion 211 comes out of the first recess 112.

In this embodiment, a first end of the snap 1 away from the first clamping portion 11 is rotatably connected to the support seat 200, and a torsion spring 4 is disposed at the connection between the snap 1 and the support seat 200. The snap 1 is also rotatably connected to the support seat 200, which facilitates the flexibility of the entire installation structure. The snap 1 and the arc-shaped clamping ring 2 may be elastic material such as plastic or may be rigid material such as steel. In addition, to ensure the strength of the engagement between the first clamping portion 11 and the second clamping portion 21, a torsion spring 4 is disposed at the connection between the snap 1 and the support seat 200, and the torsion spring 4 always provides the snap 1 with an elastic force to enable the snap 1 to rotate inward. Therefore, in the process where the second clamping portion 21 engages with the first clamping portion 11, the second protrusion 211 abuts against the first protrusion 111, causing the snap 1 to rotate outward until the second protrusion 211 leaves the first protrusion 111. At this time, the snap 1 rotates inwardly under the action of the torsion spring 4, the first protrusion 111 is snapped in the second recess 212, and the second protrusion 211 is snapped in the first recess 112. When the engagement between the first clamping portion 11 and the second clamping portion 21 needs to be released, the snap 1 just needs to be held to rotate the snap 1 outward so that the first clamping portion 11 disengages from the second clamping portion 21. The operation is more convenient.

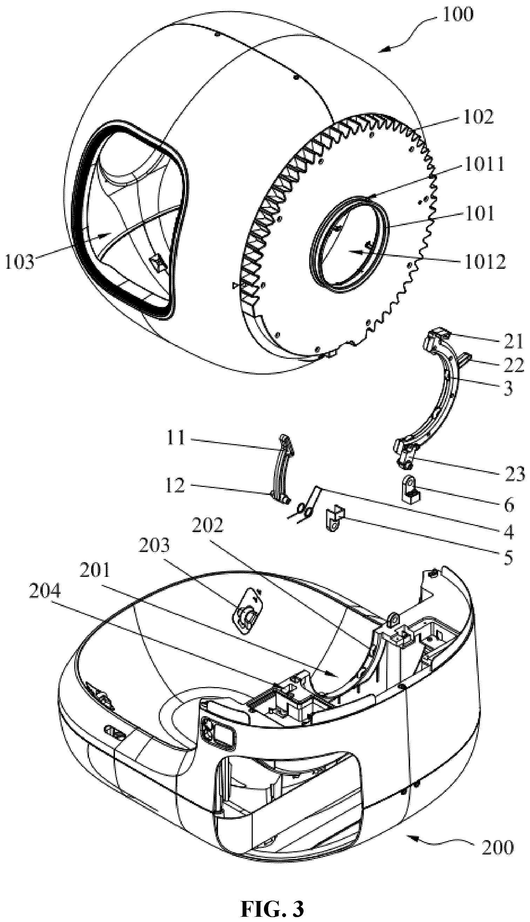

In an embodiment, as shown in FIG. 3 and FIG. 4, a first end of the snap 1 away from the first clamping portion 11 is a first connection portion 12, a first connection base 5 is disposed on the edge of the first end of the arc-shaped groove 201 of the support seat 200, and the first connection portion 12 is rotatably connected to the first connection base 5 through a rotating shaft; a first end of the arc-shaped clamping ring 2 away from the second clamping portion 21 is a second connection portion 23, a second connection base 6 is disposed on the edge of the second end of the arc-shaped groove 201, and the second connection portion 23 is rotatably connected to the second connection base 6 through a rotating shaft. In an embodiment, as shown in FIG. 2 and FIG. 3, an installation groove 204 is disposed at the connection between the snap 1 and the support seat 200, the first connection base 5 and the torsion spring 4 are separately disposed in the installation groove 204, and the first clamping portion 11 of the snap 1 projects from the installation groove 204 to ensure that the snap 1 can abut against on the sidewall of the installation groove 204 under the action of the torsion spring 4 to avoid excessive rotation of the snap 1.

In an embodiment, as shown in FIG. 4 and FIG. 5, the first clamping portion 11 is provided with an extension portion 113, and the extension portion 113 is handheld to drive the first clamping portion 11 to disengage from the second clamping portion 21. The arrangement of the extension portion 113 facilitates the holding of a user, thereby making it convenient for the user to rotate the snap 1.

In an embodiment, as shown in FIG. 4 and FIG. 6, a handle 22 is disposed on an outer side of the arc-shaped clamping ring 2. The handle 22 is used to hold by the user when the user rotates the arc-shaped clamping ring 2, so that it is convenient for the user to rotate the arc-shaped clamping ring 2.

This embodiment also provides a cat toilet. The cat toilet includes a support seat 200, a cat toilet drum 100 rotatably installed on the support seat 200, and the preceding installation structure. An installation portion 101 is disposed on the cat toilet drum 100. An arc-shaped groove 201 is disposed on the support seat 200. A first end of a snap 1 away from a first clamping portion 11 is connected to the edge of a first end of the arc-shaped groove 201. A first end of an arc-shaped clamping ring 2 away from a second clamping portion 21 is rotationally connected to the edge of a second end of the arc-shaped groove 201. The second clamping portion 21 engages with the first clamping portion 11. The installation portion 101 is rotationally locked between the arc-shaped clamping ring 2 and the arc-shaped groove 201.

During specific use, the cat toilet rum 100 is placed on the support seat 200 so that part of the installation portion 101 of the cat toilet drum 100 is disposed in the arc-shaped groove 201 of the support seat 200, and then the arc-shaped clamping ring 2 is rotated until the second clamping portion 21 engages with the first clamping portion 11, in this manner, the installation portion 101 of the cat toilet drum 100 can be rotatably locked between the arc-shaped clamping ring 2 and the arc-shaped groove 201, improving the stability of the connection between the cat toilet drum 100 and the support seat 200 and effectively preventing jumping of the cat toilet drum 100 during rotation. In addition, the cat toilet drum 100 can be unlocked by disengaging the second clamping portion 21 from the first clamping portion 11. Therefore, installation and disassembly of the cat toilet drum 100 are convenient and fast, making it easy for the user to clean and use the cat toilet drum 100.

In an embodiment, as shown in FIG. 3, the support seat 200 of the cat toilet includes a support portion and a waste collection portion; the support portion and the waste collection portion are separated by a partition; the arc-shaped groove 201 is disposed on the partition; a drum support groove that matches the outer contour of the cat toilet drum 100 is disposed on the inner side of the support portion, a main body of the cat toilet drum 100 is disposed in the drum support groove, and the installation portion 101 of the cat toilet drum 100 is disposed in the arc-shaped groove 201, thereby realizing that the support seat 200 supports the cat toilet drum 100. A driving gear is disposed on the groove wall of the drum support groove, and a driven gear 102 meshing with the driving gear is disposed on the cat toilet drum 100. The driving gear drives the driven gear 102 to rotate, thereby achieving the rotation of the cat toilet drum 100. To improve the rotation smooth of the cat toilet drum 100 on the support seat 200, multiple support wheels 203 are also disposed on the groove wall of the drum support groove, and the multiple support wheels 203 are arranged symmetrically in two pairs to ensure the rotation smooth of the cat toilet drum 100 while ensuring the stable support of the cat toilet drum 100.

In an embodiment, a pet inlet 103 is opened on the sidewall of the cat toilet drum 100, the cat toilet drum 100 may contain cat litter and is provided with a screening mechanism, and a waste outlet 1012 is opened on the installation portion 101. The screening mechanism can screen out the excrement of a pet cat in the cat litter during the rotation of the cat toilet drum 100 and guide the excrement to the waste outlet 1012 and then discharge the excrement to the waste collection portion of the support seat 200, thereby achieving automatic screening of the pet cat's excrement and cat litter. As shown in FIG. 1, when the cat toilet is in use, the first clamping portion 11 engages with the second clamping portion 21, and the installation structure is in a locked state, ensuring the connection stability between the cat toilet drum 100 and the support seat 200. As shown in FIG. 2, when the cat toilet is not in use, the first clamping portion 11 disengages with the second clamping portion 21 so that the installation structure is in an open state to facilitate the cleaning of the cat toilet drum 100.

In an embodiment, to facilitate the rotation of the cat toilet drum 100, multiple first rollers 3 are circumferentially disposed on the inner side of the arc-shaped clamping ring 2 at intervals, multiple second rollers 202 are circumferentially disposed on the groove wall of the arc-shaped groove 201 at intervals, and multiple first rollers 3 and the multiple second rollers 202 are separately in rolling contact with the outer wall of the installation portion 101. With this arrangement, when the cat toilet drum 100 rotates, the sliding friction between the installation portion 101 and the arc-shaped clamping ring 2 and the sliding friction between the installation portion 101 and the arc-shaped groove 201 are converted into rolling friction, thereby effectively reducing friction force, preventing the installation portion 101,the arc-shaped clamping ring 2, and the arc-shaped groove 201 from being worn and damaged, reducing the driving energy of the cat toilet drum 100, and saving costs.

In an embodiment, an annular groove 1011 is disposed on the outer wall of the installation portion 101, and the multiple first rollers 3 and the multiple second rollers 202 are rollingly disposed in the annular groove 1011 separately. The annular groove 1011 provides a movement track for the first rollers 3 and the second rollers 202. The installation portion 101 is clamped between the arc-shaped clamping ring 2 and the arc-shaped groove 201 through the annular groove 1011, thus strengthening the locking effect of the arc-shaped clamping ring 2 and the arc-shaped groove 201 on the cat toilet drum 100. Moreover, it is ensured that the cat toilet drum 100 is not displaced in the rotation process, and the connection stability between the cat toilet drum 100 and the support seat 200 is further improved.

## Claims

1. An installation structure, comprising:
a snap (1), wherein a first end of the snap (1) is configured to be connected to an edge of a first end of an arc-shaped groove (201) of a support seat (200), and a second end of the snap (1) is provided with a first clamping portion (11); and
an arc-shaped clamping ring (2), wherein a first end of the arc-shaped clamping ring (2) is configured to be rotatably connected to an edge of a second end of the arc-shaped groove (201) of the support seat (200), a second end of the arc-shaped clamping ring (2) is provided with a second clamping portion (21), and the arc-shaped clamping ring (2) is configured to rotate until the second clamping portion (21) engages with the first clamping portion (11) to rotatably lock an installation portion (101) of a cat toilet drum (100) between the arc-shaped clamping ring (2) and the arc-shaped groove (201).

2. The installation structure of claim 1, wherein at least one of a first protrusion (111) or a first recess (112) is disposed on the first clamping portion (11), and a second recess (212) cooperating and engaging with the first protrusion (111) or a second protrusion (211) cooperating and engaging with the first recess (112) is disposed on the second clamping portion (21), or a second recess (212) cooperating and engaging with the first protrusion (111) and a second protrusion (211) cooperating and engaging with the first recess (112) are simultaneously disposed on the second clamping portion (21).

3. The installation structure of claim 2, wherein the installation structure uses at least one of following configurations:
a first guide slope (1111) is disposed on the first protrusion (111); or
a second guide slope (2111) is disposed on the second protrusion (211).

4. The installation structure of any one of claims 1 to 3, wherein a plurality of first rollers (3) are circumferentially disposed on an inner side of the arc-shaped clamping ring (2) at intervals, and the plurality of first rollers (3) are configured to, when the first clamping portion (11) engages with the second clamping portion (21), be in rolling contact with an outer wall of the installation portion (101).

5. The installation structure of any one of claims 1 to 3, wherein an end of the snap (1) away from the first clamping portion (11) is configured to be rotatably connected to the support seat (200), and a torsion spring (4) is disposed at a connection between the snap (1) and the support seat (200).

6. The installation structure of any one of claims 1 to 3, wherein the first clamping portion (11) is provided with an extension portion (113) and the extension portion (113) is handheld to drive the first clamping portion (11) to disengage from the second clamping portion (21).

7. The installation structure of any one of claims 1 to 3, wherein a handle (22) is disposed on an outer side of the arc-shaped clamping ring (2).

8. A cat toilet, comprising a support seat (200);
a cat toilet drum (100) rotatably installed on the support seat (200); and
the installation structure of any one of claims 1 to 7, wherein an installation portion (101) is disposed on the cat toilet drum (100), an arc-shaped groove (201) is disposed on the support seat (200), a first end of a snap (1) away from a first clamping portion (11) is connected to an edge of a first end of the arc-shaped groove (201), a first end of an arc-shaped clamping ring (2) away from a second clamping portion (21) is rotatably connected to an edge of a second end of the arc-shaped groove (201), the second clamping portion (21) engages with the first clamping portion (11), and the installation portion (101) is rotatably locked between the arc-shaped clamping ring (2) and the arc-shaped groove (201).

9. The cat toilet of claim 8, wherein a plurality of first rollers (3) are circumferentially disposed on an inner side of the arc-shaped clamping ring (2) at intervals, a plurality of second rollers (202) are circumferentially disposed on a groove wall of the arc-shaped groove (201) at intervals, and the plurality of first rollers (3) and the plurality of second rollers (202) are separately in rolling contact with an outer wall of the installation portion (101).

10. The cat toilet of claim 9, wherein an annular groove (1011) is disposed on the outer wall of the installation portion (101), and the plurality of first rollers (3) and the plurality of second rollers (202) are rollingly disposed in the annular groove (1011) separately.
